# EUROPÄISCHE PATENTANMELDUNG

(11) **EP 1 086 798 A1**
(43) Veröffentlichungstag der Anmeldung: **28.03.2001**
(21) Anmeldenummer: 99118685.9
(22) Anmeldetag: 22.09.1999
(51) Int. Cl.: B29C 45/17

(54) **Formschliesseinheit für eine Spritzgiessmaschine**

(71) Anmelder: Hehl, Karl, 72290 Lossburg (DE)
(72) Erfinder: Hehl, Karl, 72290 Lossburg (DE)
(74) Vertreter: Reinhardt, Harry

(57) **Zusammenfassung**

Bei einer Formschließeinheit ist eine Einrichtung (Klemmeinrichtung 13) zur veränderlichen Festlegung des Abstands (a) zwischen stationärem Formträger (10) und beweglichem Formträger (11) vorgesehen, die zur Festlegung eines eingestellten Abstandes (a) mit einem Führungselement (12) in Wirkverbindung tritt. Dem beweglichen Formträger (11) ist eine Feststelleinrichtung zugeordnet, die bei Betätigung den beweglichen Formträger (11) in seiner jeweiligen Stellung festlegt. Der Antrieb (D) zur Bewegung des beweglichen Formträgers (11) selbst verändert bei betätigter Feststelleinrichtung (14) und außer Wirkverbindung befindlicher Klemmeinrichtung (13) den Abstand (a) entlang eines Abschnitts (12a) des Führungselements (12). Antrieb (D) weist wenigstens zwei miteinander in Wirkverbindung stehende Teile auf, von denen ein Teil an einem Abstützelement (21) abgestützt ist und das andere Teil mit dem beweglichen Formträger (11) verbunden ist. Eines der beiden Teile des Antriebs (D) erstreckt sich auch bei der Schließbewegung als Linearbewegungsmittel für den beweglichen Formträger (11) linear in Schließrichtung (s-s). Dadurch kann der Antrieb zur Bewegung des beweglichen Formträgers (11) zugleich zur Formhöhenverstellung und zum Optimieren des Öffnungshubs eingesetzt werden (Fig. 1).

## Beschreibung

### Gebiet der Erfindung

Die Erfindung betrifft eine Formschließeinheit für ein Spritzgießmaschine zur Verarbeitung von Kunststoffen und anderer plastifizierbarer Massen wie pulverförmige oder keramische Massen nach dem Oberbegriff des Anspruches 1, wobei diese Formschließeinheit eine Formhöhenverstelleinrichtung aufweist.

Unter Formhöhe wird dabei die Höhe der Form verstanden, die in Schließrichtung gemessen ist und dem Abstand zwischen beweglichem Formträger und stationärem Formträger bei geschlossener Form entspricht. Derartige Verstelleinrichtungen sind zunächst bei Spritzgießmaschinen erforderlich, bei denen die Schließbewegung und der Aufbau der Schließkraft über einen Kniehebel erfolgen, da die Abstützplatte für den Kniehebel in bezug auf das eingebaute Spritzgießwerkzeug so positioniert werden muß, daß beim Schließen des Werkzeugs oder der Form der Kniehebel in Strecklage kommt und damit bei jedem Zyklus seine maximale Schließkraft aufbringen kann.

### Stand der Technik

Aus PATENT ABSTRACTS OF JAPAN, vol. 16, No. 471 (M-1318), 1992-09-30) und der JP 04 169216 A ist eine dem Oberbegriff des Anspruches 1 zugrundeliegende Formschließeinheit mit einer Formhöhenverstellung bekannt. Diese Formhöhenverstellung wird wie üblich in Verbindung mit einem Kniehebel als Schließmechanismus eingesetzt. Am beweglichen Formträger wird eine elektromagnetisch betätigbare Fixiereinrichtung und am Abstützelement für den Kniehebelmechanismus eine manuell betätigbare Fixiereinrichtung zum lösbaren Fixieren des Abstützelements vorgesehen. Wird bei festgelegtem beweglichem Formträger und gelöstem Abstützelement der den Kniehebel antreibende Schließmotor betätigt, wird das Abstützelement in die für die neue Formhöhe erforderliche Stellung verschoben, in der bei in Strecklage befindlichem Kniehebel die Schließkraft aufgebracht werden kann. Die Festlegung des Abstützelements erfolgt nicht formschlüssig, worunter nach mehreren Zyklen zumindest die Präzision bei der wiederholten Aufbringung der Schließkraft leidet. Vor allem aber hat diese Formhöhenverstellung keinen Einfluß auf den Öffnungsweg zum Öffnen der Form, da dieser von der Bewegung des Kniehebels und nicht von der Stellung des Abstützelements abhängig ist.

Es sind Formschließeinheiten mit Formhöhenverstellungen bekannt, wobei an Holmen, die meist am stationären Formträger festgelegt sind und dem beweglichen Formträger zur Führung dienen, Gewindeabschnitte vorgesehen sind, die mit Muttern in Verbindung stehen. Diese Muttern werden über einen gesonderten Antrieb zur Formhöhenverstellung angetrieben. Die Muttern weisen auf ihrer Außenseite einen Zahnkranz auf, so daß sie entweder mit einem Zahnkranz oder einem Zahnriemen betätigt werden können. (US-A 4,281,977; Prospekt "Elektra S-Serie" (S. 5) der Ferromatic Milacron Maschinenbau GmbH, 79364 Malterdingen).

Zur Formhöhenverstellung und Verriegelung einer Abstützplatte für den Schließmechanismus ist es von der Engel Vertriebs GmbH, A-4311 Schwertberg, Österreich bekannt, die Holme mit Rillen zu versehen und an diesen Rillen zwei Halbmuttem dadurch festzuspannen, daß die Halbmuttern in radialer Richtung aufeinander zu bewegt werden, bis sie zur Anlage an den gerillten Bereich der Führungsholme kommen.

Von der Firma Husky Injection Molding Systems ist es ferner bekannt, eine derartige Verriegelung mit einem Bajonettverschluß zu erzielen. Der Holm besitzt hierzu Bereiche, in die ein Schließkolben eingreifen kann, sowie Bereiche, entlang derer der radial auf den Führungsholmen bewegliche Schließkolben gleiten kann. Durch eine Drehung des Schließkolbens wird ein formschlüssiger Eingriff bewirkt, so daß an diesem Kolben zugleich zumindest ein Teil der Schließkraft ebenfalls aufgebracht werden kann. Der Einsatz erfolgt jedoch nicht zur Formhöhenverstellung sondern wie bei der DE 42 43 735 C zur Festlegung des beweglichen Formträgers bei einem Zweiplattensystem, ohne dass Einfluß auf den Schließantrieb genommen wird.

### Zusammenfassung der Erfindung

Ausgehend von diesem Stand der Technik liegt der vorliegenden Erfindung die Aufgabe zugrunde, eine Formschließeinheit der eingangs genannten Gattung zu schaffen, bei der die Formhöhenverstellung zugleich zum Optimieren des Öffnungshubs eingesetzt werden kann.

Diese Aufgabe wird durch eine Formschließeinheit mit den Merkmalen des Anspruches 1 gelöst.

Dem beweglichen Formträger ist eine Feststelleinrichtung zugeordnet, so daß sich der bewegliche Formträger in seiner jeweiligen Position beliebig festlegen läßt. Wird die Verriegelung des Antriebs von den Holmen gelöst, kann der Antrieb mit seiner jeweiligen Abstützung relativ zu den Holmen verstellt werden, so daß eine Formhöhenverstellung eintritt. Da die üblicherweise für eine Hauptachse eingesetzte Antriebseinrichtung nun für eine Nebenfunktion eingesetzt werden kann, kann auf einen zusätzlichen Antrieb zur Formhöhenverstellung verzichtet werden. Zusätzliche Führungselemente sind nicht erforderlich, da die ohnehin vorhandenen Führungselemente, meist die Führungssäulen, verwendet werden können. Im Gegensatz zu den vorbekannten Formhöhenverstellungen an Kniehebelschließmechanismen kann unabhängig von der Formhöhe an Schließmechanismen mit Linearbewegungsmitteln gleichzeitig der Öffnungshub bzw. der Schließweg optimiert werden, wenn auf ein- und derselben Maschine Spritzgießformen mit unterschiedlicher Formhöhe eingesetzt werden. Da diese Einheiten aufgrund ihrer reinen Linearbewegung im Hinblick auf den Öffnungshub beliebig einstellbar sind, wurde bisher Abstand davon genommen, derartige Formschließeinheiten mit einer Formhöhenverstellung zu versehen. Durch den Einsatz der Formhöhenverstelleinrichtung können sich jedoch in jedem Zyklus die Druckaufbauzeiten in der Größenordnung von mehreren Zehntelsekunden reduzieren. Es ergibt sich also eine Optimierung der Position der gesamten Schließeinheit.

Bei einer Ausgestaltung nach Anspruch 2 wird bei einer hydraulischen Schließeinheit mit dem Öffnungshub zugleich das Ölpolster, das bei jedem Zyklus den Schließdruck aufbringen muß optimiert und damit meist verkleinert, so dass nicht nur ein energetisches Optimieren des Öffnungshubs erreicht wird, sondern, da weniger Volumen unter Druck gesetzt werden muß, zugleich die Zeit zum Aufbringen des Drucks bei sonst gleichen Randbedingungen verringert wird.

Erfolgt dasselbe bei einer elektromechanischen Einheit gemäß Anspruch 3 werden die Bauteile oder zumindest die Längen der Bauteile verringert, die den Schließkräften und damit den entsprechenden Dehnungen unterworfen sind, was ebenfalls zur Reduzierung der Zykluszeit beiträgt.

Nach Anspruch 4 wird dort, wo auf Dauer die höheren Kräfte aufgebracht werden müssen, also im üblichen Gebrauchszustand, eine formschlüssige Verbindung vorgesehen, die bedarfsweise zur Formhöhenverstellung gelöst werden kann. In dem anderen Bereich, in dem nur kurzfristig eine Festlegung des beweglichen Formträgers erfolgen muß, um die Formhöhenverstellung zu bewirken, kann hingegen auf den Führungselementen oder am Maschinenfuß der bewegliche Formträger lediglich durch eine kraftschlüssige Verbindung festgelegt werden.

In beiden Fällen, vor allem aber bei der formschlüssigen Wirkverbindung der Feststelleinrichtung gemäß Anspruch 5, werden hierzu Spannzangen eingesetzt. Die Spannzangen haben den Vorteil, daß infolge des Festspannens eine spielfreie Klemmung zwischen Führungselementen und insbesondere Abstützelement gewährleistet ist, da entgegen den bekannten Gewindeverstellungen nicht ein Gewindespiel mit einzurechnen ist. Dadurch kann gleichzeitig die Präzision der gesamten Spritzgießmaschine trotz vorhandener Formhöheneinstellung gesteigert werden. Zur Sicherheit sind die Einrichtungen so aufgebaut, daß die Grundfunktion des Spritzgießens stets selbsttätig unter Wirkung elastischer Mittel eingestellt wird. Nach Anspruch 8 kann jedoch auch eine Gewindeverbindung zur formschlüssigen Verbindung vorgesehen werden, da sich ein Gewinde andererseits aufgrund der kontinuierlichen Herstellung beim Gewindeschneiden sehr präzise herstellen läßt.

Weitere Vorteile ergeben sich aus den Unteransprüchen.

### Kurzbeschreibung der Figuren

Im folgenden wird die Erfindung anhand der beigefügten Figuren näher erläutert. Es zeigen:
- Fig. 1: Eine schematische Darstellung einer Spritzgießmaschine in Seitenansicht in Gebrauchsfunktion,
- Fig. 2: die Spritzgießmaschine gemäß Fig. 1 mit verklemmten beweglichen Formträger,
- Fig. 3: eine Darstellung gemäß Fig. 1 in Gebrauchsfunktion mit verstelltem Abstützelement,
- Fig. 4,5: die Spannzange der Klemmeinrichtung zur Festlegung des Abstands a in geöffneter und geschlossener Stellung,
- Fig. 6,7: die Feststelleinrichtung am beweglichen Formträger in geöffneter und verklemmter Stellung,
- Fig. 8: ein Ausführungsbeispiel an einer holmlosen Spritzgießmaschine.

### Darstellung bevorzugter Ausführungsbeispiele

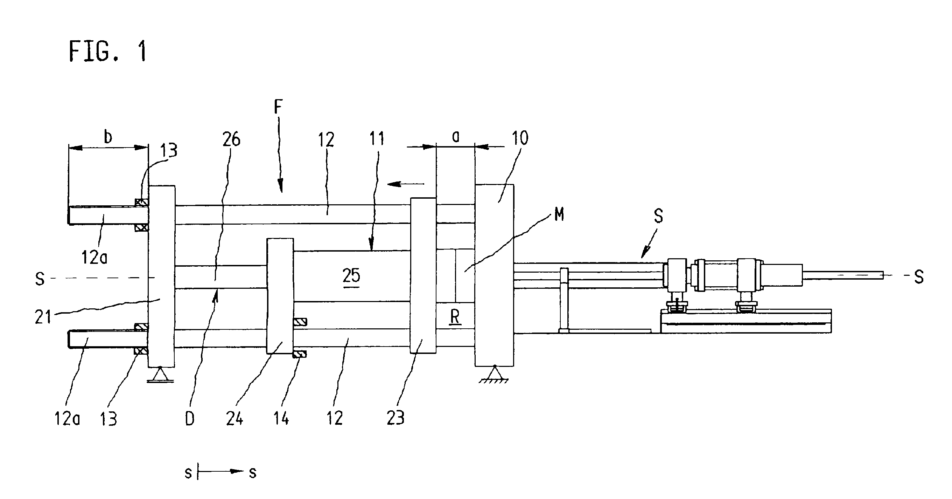

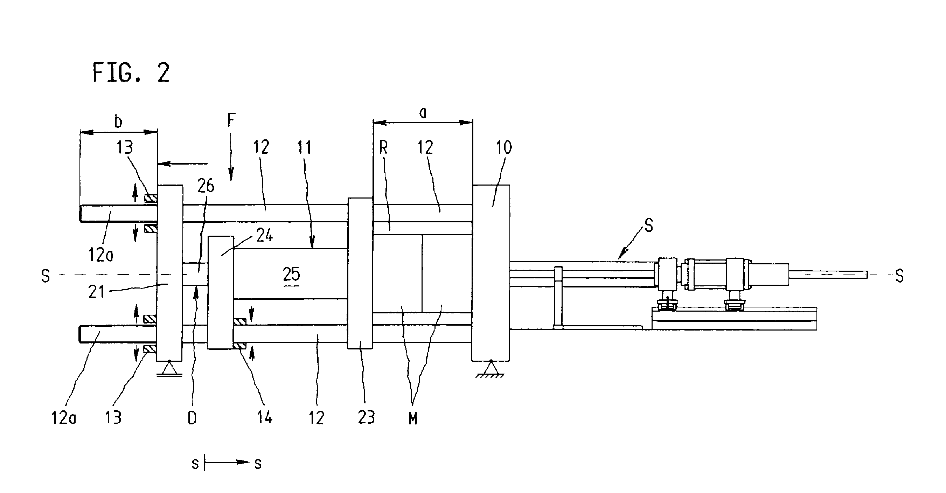

Fig. 1 zeigt schematisch eine Spritzgießmaschine zur Verarbeitung von Kunststoffen und anderer plastifizierbarer Massen mit einer Spritzgießeinheit S und einer Formschließeinheit F. Die Formschließeinheit besitzt einen stationären Formträger 10, dessen Lage z.B. gegenüber dem Maschinenfuß fest ist und im vorliegenden Fall durch ein ortsfester Lager angedeutet ist. Ferner ist ein beweglicher Formträger vorgesehen, der im vorliegenden Fall eine bauliche Einheit bestehend aus der Aufspannplatte 23, dem Zylinder 25 mit Kolbenstange 26 des Antriebs D und einer Spannplatte 24 ist. Formaufspannplatte und Spannplatte sind miteinander verspannt, so daß sich eine präzise an den Führungselementen 12 geführte Einheit ergibt, die den beweglichen Formträger 11 bildet und eine vorgegebene feste Länge besitzt. Die Formaufspannplatte 23 des beweglichen Formträgers 11 und der stationäre Formträger 10 schließen zwischen sich den Formspannraum R ein. In diesem Formspannraum können Spritzgießformen M, wie insbesondere Fig. 1 und Fig. 2 verdeutlichen, veränderlicher Höhe eingesetzt werden. Je nach Höhe der Spritzgießform M ist der Abstand a zwischen beweglichem Formträger 11 und stationärem Formträger 10 größer oder kleiner. Die Höhe der Form, die diesen Abstand a bestimmt, ist in Schließrichtung s-s gemessen.

Zur Bewegung des beweglichen Formträgers ist ein Antrieb D vorgesehen, der den beweglichen Formträger in Schließrichtung s-s auf den stationären Formträger 10 zu und von diesem weg bewegt. Teil dieses Antriebs D ist im Ausführungsbeispiel außer den Zylindern 25 die Kolbenstange 26. Im vorliegenden Fall stützt sich die Kolbenstange 26 am Abstützelement 21 ab. Denkbar ist auch, den Schließmechanismus am stationären Formträger anzuordnen und dadurch ein Zweiplattensystem zu erhalten, wobei dann die Einrichtung zur Festlegung des Abstands a als Klemmeinrichtung 13 dem stationären Formträger 10 zugeordnet ist. Ferner kann der Antrieb D, der hier hydraulisch ist, z.B. auch elektromechanisch oder pneumatisch sein.

Den genannten Antrieben ist gemeinsam, dass sie wenigstens zwei miteinander in Wirkverbindung stehende Teile aufweisen, von denen ein Teil am Abstützelement 21 abgestützt ist und das andere Teil mit dem beweglichen Formträger 11 verbunden ist. Eines der beiden Teile des Antriebs D erstreckt sich als Linearbewegungsmittel für den beweglichen Formträger 11 linear in Schließrichtung. Dazu kann es sich entweder linear gemeinsam mit dem beweglichen Formträger 11 bewegen oder am Abstützelement angeordnet sein. Was dies bedeutet, wird an den folgenden Beispielen deutlich.

Handelt es sich beim Antrieb D wie in den Figuren dargestellt um einen Hydraulikantrieb oder um einen pneumatischen Antrieb, so bilden die Teile des Antriebs D, Zylinder 25 und Kolbenstange 26 einer Kolben-Zylinder-Einheit. In diesem Fall sind Zylinder als auch Kolbenstange Linearbewegungsmittel, die bei der Bewegung des Antriebs linear ineinandertauchen. So bewegt sich in den Figuren der Zylinder 25 mit dem beweglichen Formträger 11 und bildet insofern eine Einheit fester Länge, in die die Kolbenstange als anderes Teil des Antriebs eintaucht. Eine nichtlineare Bewegung von Teilen des Antriebs wie bei einem Kniehebel findet nicht statt.

Bei einem elektromechanischen Antrieb wie z.B. einer Kugelrollspindel oder bei Teleskopaktivatoren, bei denen in einer Gewindehülse ein Spindelkopf bewegt wird wie z.B. bei der DE 195 42 453 A , umfassen die Teile des Antriebs D ein Rotationselement und ein damit in Wirkverbindung stehendes Linearbewegungsmittel, das in axial Richtung, nämlich in Schließrichtung s-s an Abstützelement 21 oder beweglichem Formträger 11 festgelegt ist und damit ebenfalls eine Einheit fester Länge bildet.

Da diese Einheiten aufgrund ihrer reinen Linearbewegung im Hinblick auf den Öffnungshub beliebig einstellbar sind, wurde bisher Abstand davon genommen, derartige Formschließeinheiten mit einer Formhöhenverstellung zu versehen. Dennoch hat gerade dies deutliche Vorteile. So wird bei einer hydraulischen Schließeinheit mit dem Öffnungshub zugleich das Ölpolster, auf dem bei jedem Zyklus der Schließdruck lastet, optimiert und damit meist verkleinert, so dass nicht nur ein energetisches Optimieren des Öffnungshubs erreicht wird, sondern, da weniger Volumen unter Druck gesetzt werden muß, zugleich die Zeit zum Aufbringen des Drucks bei sonst gleichen Randbedingungen verringert wird. Erfolgt dasselbe bei einer elektromechanischen Einheit werden die Bauteile oder zumindest die Längen der Bauteile verringert, die den Schließkräften und damit den entsprechenden Dehnungen unterworfen sind.

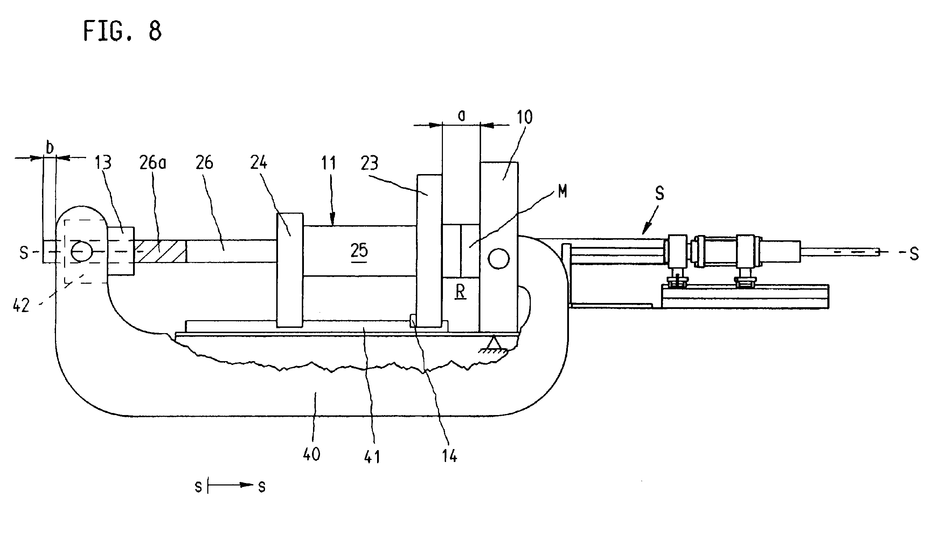

Als Führungssäulen ausgebildete Führungselemente 12 durchgreifen in den Figuren 1 bis 3 den stationären Formträger 10 und den beweglichen Formträger 11. Sie dienen dem beweglichen Formträger 11 während seiner Bewegung als Führung und können, worauf noch einzugehen ist, auch dem Abstützelement 21 während seiner Bewegung als Führung dienen. Hierfür ist nur ein Abschnitt 12a des Führungselements 12 erforderlich ist, so daß bei anderweiter Führung des beweglichen Formträgers 11 auf das restliche Führungselement verzichtet werden kann (Fig. 8). Das Abstützelement 21 ist im Ausführungsbeispiel gegenüber dem Maschinenfuß in Schließrichtung s-s beweglich gelagert, was durch das Symbol für die entsprechende bewegliche Lagerung angedeutet ist. Die Führungselemente 12 weisen wenigstens einen Abschnitt 12a auf, mit dem die Klemmeinrichtung 13 zwischen stationärem Formträger 10 und beweglichem Formträger 11 in Wirkverbindung tritt, sobald der gewünschte Abstand a eingestellt ist.

Ergänzend wird dem beweglichen Formträger 11 eine Feststelleinrichtung 14 zugeordnet, die bei Betätigung den beweglichen Formträger 11 in seiner jeweiligen Stellung festlegt. Dieses Festlegen kann wie im Ausführungsbeispiel an den Führungselementen 12 erfolgen, denkbar ist jedoch auch eine Festlegung des beweglichen Formträgers am Maschinenfuß oder an einer anderen geeigneten stationären Stelle. Sobald dieses Festlegen des beweglichen Formträgers erfolgt ist, kann der Antrieb D, der üblicherweise Bestandteil der Schließeinrichtung zum Bewegen des beweglichen Formträgers 11 und zum Aufbringen der Schließkraft ist, bei betätigter Feststelleinrichtung 14 und außer Wirkverbindung befindlicher Klemmeinrichtung 13 betätigt werden, um das Abstützelement 21 entlang seiner Führung, hier entlang den Abschnitten 12a der Führungselemente 12 zu bewegen und dadurch für die folgenden Spritzzyklen den Abstand a zu verändern. Dies zeigen die Figuren 1 bis 3.

In Figur 1 ist die Klemmeinrichtung 13 an den Führungselementen 12 fixiert. Gleichzeitig ist die Feststelleinrichtung 14 geöffnet, was der Abstand der Klemmbacken zu den Führungselementen 12 in Fig. 1 verdeutlicht. In diesem Zustand kann der bewegliche Formträger entlang den Führungselementen durch den Antrieb D bewegt werden, wobei eine Optimierung im Hinblick auf den Abstand a der in Fig. 1 dargestellten kleinen Form M erfolgt.

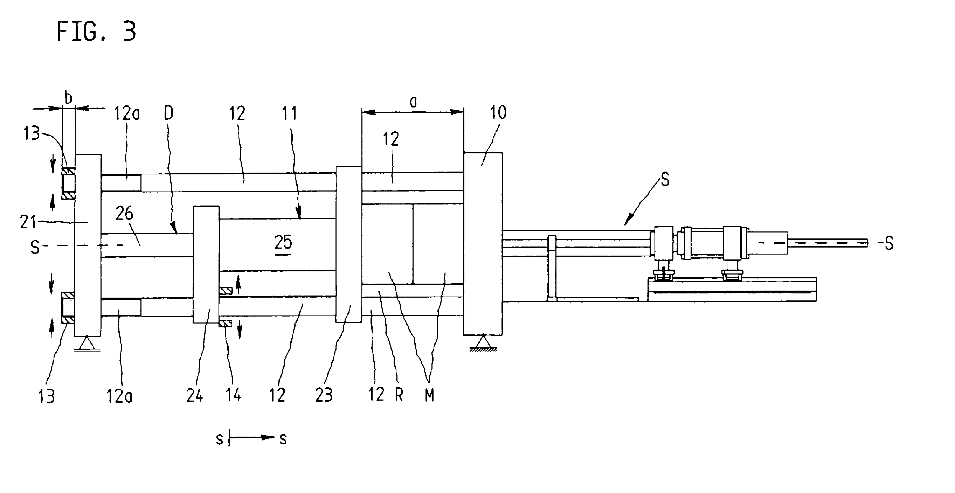

In Fig. 2 wird eine größere Spritzgießform M in den Formspannraum R überführt. Hierbei befindet sich das Abstützelement 21 noch in der Position von Fig. 1. Es wird deutlich, daß in diesem Zustand keine ausreichende Öffnungsbewegung für die Spritzgießform M bewerkstelligt werden kann. Daher wird, wie durch die Pfeile angedeutet, die Feststelleinrichtung 14 verriegelt, wodurch der bewegliche Formträger in seiner Position festgehalten wird. Anschließend wird die Klemmeinrichtung 13, die jedem Führungselement 12 zugeordnet ist, entriegelt. Wird jetzt der Antrieb D betätigt, ergibt sich keine Bewegung des beweglichen Formträgers, weil dieser verklemmt ist. Stattdessen wird jetzt das Abstützelement 21 in Schließrichtung s-s bewegt, so daß sich eine Stellung des Abstützelements gemäß Fig. 3 ergibt, die an die entsprechende Formhöhe angepaßt ist. Um wieder einen Spritzgießprozeß zu ermöglichen, wird das Abstützelement 21 mit der Klemmeinrichtung 13 verriegelt und die Feststelleinrichtung 14 entriegelt. Nun kann angepaßt an die geänderte Formhöhe der weitere Herstellungsprozeß von Spritzgießteilen erfolgen.

Genaugenommen wird der Abstand a zwischen stationärem Formträger 10 und beweglichem Formträger 11 ebenso wie der Öffnungshub der Formschließeinheit durch den Antrieb D eingestellt, der bei einer kleinen Spritzgießform mit geringer Formhöhe einen größeren Bewegungsweg zurücklegen muß als bei einer Spritzgießform mit großer Formhöhe. Unterstellt man jedoch einen unveränderten Bewegungsweg des beweglichen Formträgers 11 findet eine Veränderung des Abstands a statt, wie ein Vergleich zwischen den Fig. 1 und 3 zeigt. Verändert hat sich auch der Abstand zwischen Abstützelement 21 und stationärem Formträger 10 sowie die Länge b der über das Abstützelement hinausragenden Führungselemente 12. Insofern könnte auch von einer Verstelleinrichtung zur Verstellung der Länge b der überstehenden Führungselemente 12 unter Optimierung der Ölmenge bei unverändertem Bewegungsweg des Antriebs D gesprochen werden.

Selbstverständlich muß die Feststelleinrichtung 14 nur an einem beliebigen Teil des beweglichen Formträgers angeordnet sein, wobei sie eine einzige oder mehrere Feststelleinrichtungen umfassen kann. Im Ausführungsbeispiel erfolgt die Anordnung an der Spannplatte 24, die Anordnung kann jedoch auch unmittelbar an der Formaufspannplatte 23 erfolgen. Es ist nur sicherzustellen, daß die Bewegung des beweglichen Formträgers durch die Feststelleinrichtung vorübergehend unterbunden werden kann.

Der Abschnitt 12a des Führungselements 12 weist einen veränderten Querschnitt auf, wobei diese Querschnittsveränderung dazu beitragen soll, daß eine formschlüssige Wirkverbindung mit der Klemmeinrichtung 13 zur Festlegung des Abstands a erfolgen kann. Ein spielfreier Formschluß ist an dieser Stelle erwünscht, da hohe Kräfte während des Spritzzyklus aufgebracht werden müssen, denen die Klemmeinrichtung 13 gewachsen sein muß. Die Querschnittsveränderung können Rillen oder im Ausführungsbeispiel ein Gewinde 12b sein. Ein Gewinde hat den Vorteil, daß es sich aufgrund der kontinuierlichen Herstellung beim Gewindeschneiden sehr präzise herstellen läßt. Anstelle der Spannzange kann in ein derartiges Gewinde aber auch ein übliche Mutter eingreifen, die zum Versetzen des Abstützelements angetrieben wird. Gemeinsam ist beiden Ausführungsformen jedoch, daß nicht nur die Formhöhe, sondern auch der Öffnungshub oder der Schließweg eingestellt werden kann.

Bei der Feststelleinrichtung 14 hingegen erfolgt eine kraftschlüssige Festlegung, da während des Spritzzyklus diese Einrichtung geöffnet ist und nur während der Nebenfunktion der Formhöhenverstellung geringe Kräfte aufgebracht werden. Insofern genügt hierfür die kraftschlüssige Verbindung.

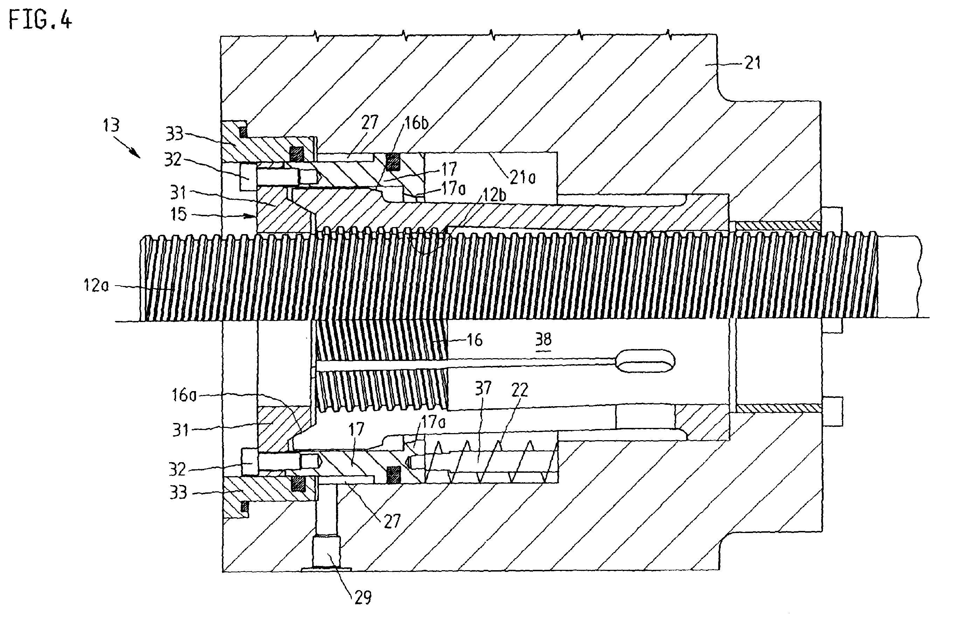

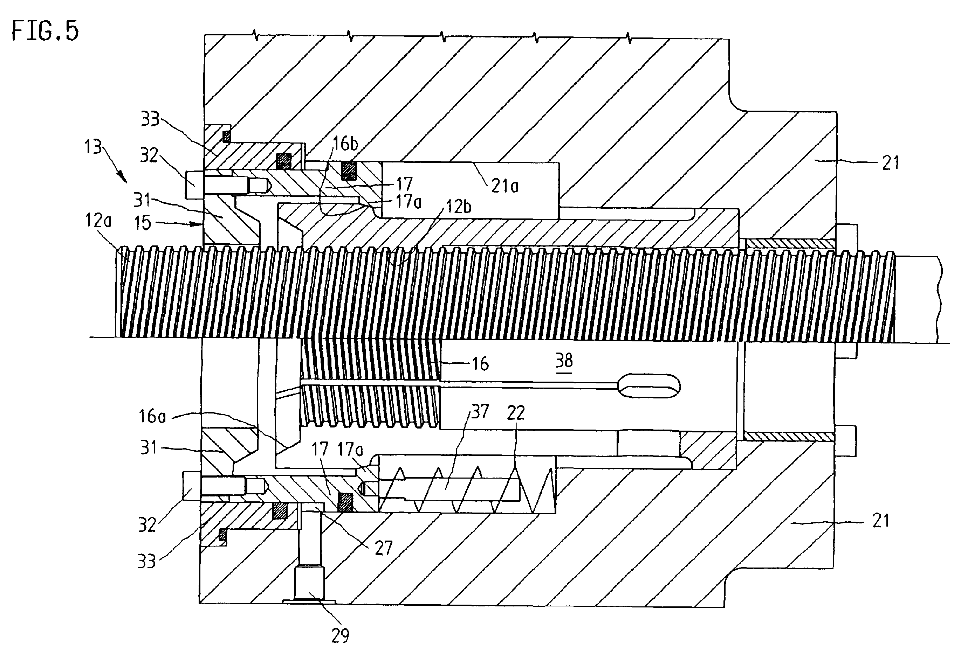

Die Figuren 4 und 5 zeigen bevorzugte Ausführungsformen der Klemmeinrichtung 13 zur spielfreien Festlegung des Abstands a. Als Klemmeinrichtung 13 wird eine Betätigungselement 15 für eine erste Spannzange 38 vorgesehen, das koaxial zu den Führungselementen 12 im Bereich des Abschnitts 12a angeordnet ist. Die Spannzange besitzt eine Gewindehülse 16, die bei Betätigung der Spannzange mit dem Gewinde 12b des Abschnitts 12a in formschlüssige Wirkverbindung tritt. Die Klemmeinrichtung 13 ist so aufgebaut, daß sie selbsttätig unter der Kraft eines an Stiften 37 gehaltenen elastischen Mittels 22 in verriegelter Stellung bleibt. Das Entriegeln zur Formhöhenverstellung bzw. zur Veränderung des Abstands a erfolgt unter Einwirkung eines hydraulischen Mediums. Dieses hydraulische Medium wird über den Hydraulikanschluß 29 in die ringförmige Hydraulikkammer 27 geleitet. Wie ein Vergleich zwischen Fig. 4 und 5 zeigt, führt diese hydraulische Beaufschlagung zu einer axialen Bewegung des Ringkolbens 17 gegen die Kraft der elastischen Mittel 22. Hierbei geraten der konusförmige Abschnitt 17a des Ringkolbens 17 außer Eingriff und der konusförmige Bereich 16a der Spannzange 38 in Eingriff. In der Folge wird die Gewindehülse 16 durch den Konusring 31 aufgeweitet und eine Relativbewegung zwischen Abstützelement 21 und Führungselement 12 ermöglicht. Wird der Hydraulikdruck in der Hydraulikkammer 27 abgebaut, ergibt sich infolge der in der Ausnehmung 21a des Abstützelements 21 gelagerten elastischen Mittel 22 eine Rückstellung des Ringkolbens 17 in eine Stellung gemäß Fig. 5. Bei dieser Bewegung wird mit dem Ringkolben 17 der über Befestigungsmittel 32 mit diesem verbundene Konusring 31 ebenfalls axial bewegt. Andererseits endet die Bewegung des (Doppel-)Ringkolbens 17 durch das Aufeinanderlaufen des konusförmigen Bereichs 16b und des konusförmigen Abschnitts 17a. Die Hydraulikkammer 27 ist in axialer Richtung noch durch ein Abschlußelement 33 begrenzt.

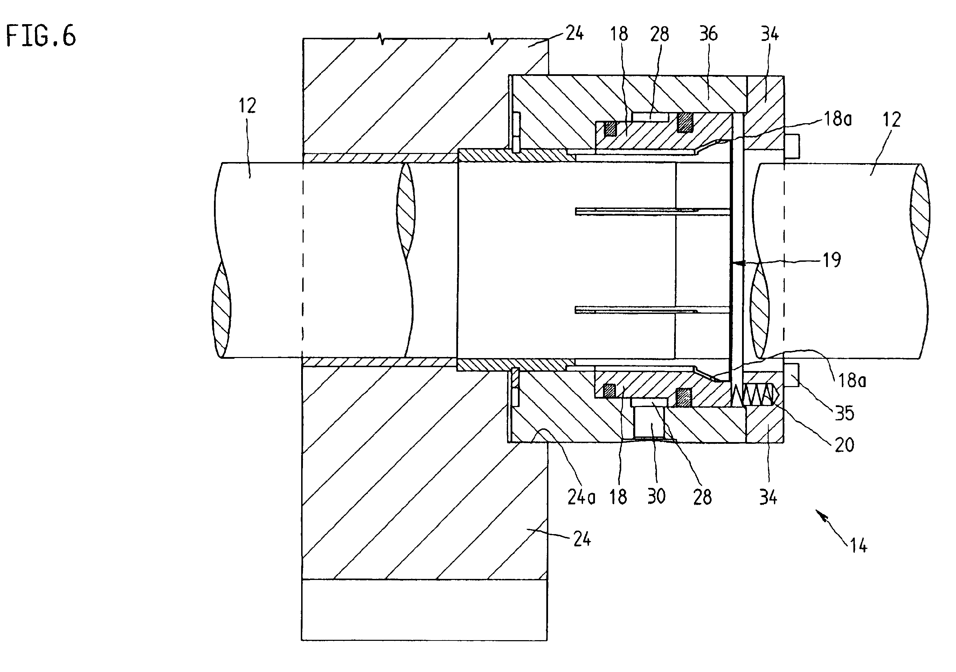

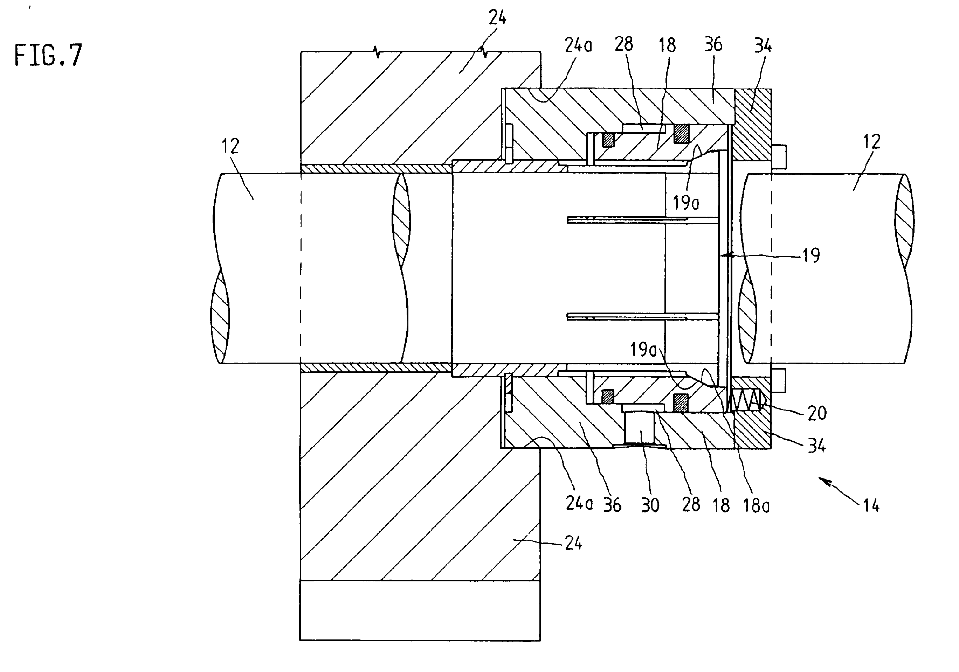

Die Figuren 6 und 7 zeigen die Feststelleinrichtung 14. Diese Feststelleinrichtung 14 weist eine zweite Spannzange 19 auf, die im Ausführungsbeispiel koaxial zu einem Führungselement 12 angeordnet ist und am beweglichen Formträger 11, genauer gesagt an der Spannplatte 24 in einer Ausnehmung 24a festgelegt ist. Die Feststelleinrichtung besitzt ein Gehäuse 36, das eine Hydraulikkammer 28 radial nach außen umschließt, die über einen Hydraulikanschluß 30 mit Hydraulikmedium beaufschlagbar ist. Die zweite Spannzange 19 weist einen konusförmigen Bereich 19a auf, der mit einem konusförmigen Abschnitt 18a des hydraulisch betätigten Ringkolbens 18 die Klemmung bewirkt. Die Rückstellung in die nicht geklemmte Stellung erfolgt unter Wirkung eines weiteren elastischen Mittels 20. Wie ein Vergleich zwischen Fig. 6 und 7 zeigt, wird die Bewegung des Ringkolbens einerseits durch einen Anschlag am Gehäuse 36 begrenzt und andererseits durch das in Anlage Kommen von konusförmigem Abschnitt 18a und konusförmigem Bereich 19a begrenzt. Das elastische Mittel 20 ist in einem Abschlußelement 34 gelagert, das mit dem Gehäuse 36 über Befestigungsmittel 35 verbunden ist.

Fig. 8 zeigt ein weiteres Ausführungsbeispiel, in dem als Führungselement die Kolbenstange 26 des Antriebs D dient, die über einen Abschnitt 26a, der insofern dem bisher erwähnten Abschnitt 12a gleichzusetzen ist, mit der Klemmeinrichtung 13 in formschlüssige Wirkverbindung tritt.

Fig. 8 zeigt auch, daß ein Einsatz von Klemmeinrichtung 13 und Feststelleinrichtung 14 auch an einer holmlosen Maschine möglich ist, bei der anstelle von Führungssäulen ein Kraftübertragungselement 40 die beim Spritzgießen auftretenden Kräfte um den Formspannraum R zur Erzielung einer besserer Zugänglichkeit herumleitet. Dieses gegebenenfalls auch mehrteilige Kraftübertragungselement ist einerseits am stationären Formträger 10 angelenkt. Andererseits stützt sich an dessen gegenüberliegenden, dem beweglichen Formträger 11 zugeordneten Ende 42 der Antrieb D ab. Hier kann die Klemmeinrichtung 13 vorgesehen werden, die mit dem Abschnitt 26a zusammenwirkt. Ist die Klemmeinrichtung 13 geöffnet und die am Führungselement 41 angreifende Feststelleinrichtung 14 verriegelt kann der Antrieb D den Abschnitt 26a der Kolbenstange 26 relativ zur Klemmeinrichtung verschieben. Dadurch ergeben sich für folgende Spritzzyklen veränderte Bewegungswege des beweglichen Formträgers.

### Liste der Bezugszeichen (kein Bestandteil der Anmeldeunterlagen)

- 10: stationärer Formträger
- 11: beweglicher Formträger
- 12: Führungselement
- 12a: Abschnitt
- 12b: Gewinde
- 13: Einrichtung
- 14: Feststelleinrichtung
- 15: Betätigungselement
- 15a: konusförmiger Bereich
- 16: Gewindehülse
- 17: Ringkolben
- 17a: konusförmiger Abschnitt
- 18: weiterer Ringkolben
- 18a: konusförmiger Abschnitt
- 19: zweite Spannzange
- 19a: konusförmiger Bereich
- 20: weiteres elastisches Element
- 21: Abstützelement
- 21a: Ausnehmung
- 22: elastisches Mittel
- 23: Aufspannplatte von 11
- 24: Spannplatte
- 24a: Ausnehmung
- 25: Zylinder von D
- 26: Kolbenstange von D
- 26a: Abschnitt
- 27,28: Hydraulikkammer
- 29,30: Hydraulikanschluß
- 31: Konusring
- 32,35: Befestigung
- 33,34: Abschlußelement
- 36: Gehäuse
- 37: Stift
- 38: Snannzanae
- 40: Kraftübertragungselement
- 41: Führungselement
- a: Abstand
- s-s: Schließrichtung
- D: Antrieb
- F: Formschließeinheit
- M: Spritzgießform
- R: Formspannraum
- S: Spritzgießeinheit

## Patentansprüche

1. Formschließeinheit für eine Spritzgießmaschine zur Verarbeitung von Kunststoffen und anderer plastifizierbarer Massen, mit
- einem stationären Formträger (10),
- einem beweglichen Formträger (11), der zwischen sich und dem stationären Formträger (10) einen Formspannraum (R) zur Aufnahme von Spritzgießformen (M) veränderlicher Höhe, gemessen in einer Schließrichtung (s-s), aufweist,
- einem Antrieb (D) zum Bewegen des beweglichen Formträgers (11) in Schließrichtung (s-s) auf den stationären Formträger (10) zu und vom stationären Formträger weg, der wenigstens zwei miteinander in Wirkverbindung stehende Teile aufweist, von denen ein Teil an einem Abstützelement (21) abgestützt ist und das andere Teil mit dem beweglichen Formträger (11) verbunden ist,
- Führungselementen (12), die den beweglichen Formträger (11) während seiner Bewegung in Schließrichtung (s-s) führen, mit wenigstens einem Abschnitt (12a,26a)
- einer Einrichtung zur veränderlichen Festlegung des Abstands (a) zwischen stationärem Formträger (10) und beweglichem Formträger (11) gemessen bei geschlossener Spritzgießform (M) und unter Annahme eines gegenüber dem vorhergehenden Zustand unveränderten Bewegungswegs des beweglichen Formträgers, welche Einrichtung zur Festlegung des eingestellten Abstandes (a) mit dem Abschnitt (12a,26a) der Führungselemente (12) in Wirkverbindung tritt,
- einer dem beweglichen Formträger (11) zugeordneten Feststelleinrichtung (14), die bei Betätigung den beweglichen Formträger (11) in seiner jeweiligen Stellung festlegt,
- wobei der Antrieb (D) selbst bei betätigter Feststelleinrichtung (14) und außer Wirkverbindung befindlicher Einrichtung zur veränderlichen Festlegung des Abstandes (a) den Abstand (a) durch Verschieben der Einrichtung zur veränderlichen Festlegung des Abstandes (a) entlang des Abschnittes (12a,26a) verändert,
dadurch gekennzeichnet, dass sich eines der beiden Teile des Antriebs (D) als Linearbewegungsmittel für den beweglichen Formträger (11) auch bei der Schließbewegung linear in Schließrichtung erstreckt, und dass der Antrieb (D) bei Veränderung des Abstands (a) auch seinen eigenen Öffnungshub einstellbar ändert.

2. Formschließeinheit nach Anspruch 1, dadurch gekennzeichnet, dass der Antrieb (D) ein Hydraulikantrieb ist und dass die Teile des Antriebs (D) Zylinder (25) und Kolbenstange (26) einer hydraulischen Kolben-Zylinder-Einheit sind.

3. Formschließeinheit nach Anspruch 1, dadurch gekennzeichnet, dass der Antrieb (D) ein elektromechanischer Antrieb ist und dass die Teile des Antriebs (D) ein Rotationselement und ein damit in Wirkverbindung stehendes Linearbewegungsmittel umfassen.

4. Formschließeinheit nach einem der Ansprüche 1 bis 3, dadurch gekennzeichnet, dass daß die Einrichtung zur veränderlichen Festlegung des Abstandes (a) eine Klemmeinrichtung (13) ist und dass die Einrichtung zur Festlegung des eingestellten Abstandes (a) mit dem Abschnitt (12a,26a) der Führungselemente (12) in formschlüssige Wirkverbindung tritt, wobei unter wechselweiser Betätigung der beiden Einrichtungen in Verbindung mit dem Antrieb (D) der Abstand (a) veränderbar ist.

5. Formschließeinheit nach einem der Ansprüche 1 bis 4, dadurch gekennzeichnet, dass die Klemmeinrichtung (13) eine erste Spannzange (37) aufweist, die koaxial zum Führungselement (12) im Bereich des Abschnitts (12a) angeordnet ist und mit dem Abschnitt (12a) in formschlüssige, spielfreie Wirkverbindung überführbar ist.

6. Formschließeinheit nach Anspruch 5, dadurch gekennzeichnet, daß die erste Spannzange (38) einen konusförmigen Bereich (16a) aufweist, der zur Lösung der Spannung hydraulisch in Wirkverbindung mit einem mit einem Ringkolben (17) verbundenen Konusring (31) und unter der Kraft eines elastischen Mittels (22) außer Wirkverbindung mit dem Konusring kommt, wobei der Ringkolben (17) entlang des Führungselement (12) begrenzt axial beweglich ist.

7. Formschließeinheit nach einem der Ansprüche 1 bis 6, dadurch gekennzeichnet, daß der Abschnitt (12a) der Führungselemente (12) zur formschlüssigen Wirkverbindung mit einer Gewindehülse (16) der Klemmeinrichtung (13) ein Gewinde (12b) aufweist.

8. Formschließeinheit nach einem der Ansprüche 1 bis 4, dadurch gekennzeichnet, daß die Klemmeinrichtung (13) zur formschlüssigen Wirkverbindung mit dem Abschnitt (12a,26a) wenigstens eine Mutter aufweist, die mit einem Gewinde (12b) des Abschnitts in Wirkverbindung steht.

9. Formschließeinheit nach einem der Ansprüche 1 bis 8, dadurch gekennzeichnet, daß die betätigte Feststelleinrichtung (14) den beweglichen Formträger (11) an den Führungselementen (12) kraftschlüssig festlegt.

10. Formschließeinheit nach einem der Ansprüche 1 bis 4, dadurch gekennzeichnet, daß die Feststelleinrichtung (14) eine zweite Spannzange (19) aufweist, die koaxial zu einem Führungselement (12) angeordnet und am beweglichen Formträger (11) festgelegt ist.

11. Formschließeinheit nach Anspruch 10, dadurch gekennzeichnet, daß die zweite Spannzange (19) einen konusförmigen Bereich (19a) aufweist und daß ein zweiter hydraulisch betätigter Ringkolben (18) mit einem konusförmigen Abschnitt (18a) bei hydraulischer Beaufschlagung die Klemmung mit dem konusförmigen Bereich (19a) bewirkt, wobei der weitere Ringkolben (18) vorzugsweise über ein weiteres elastisches Element (20) rückstellbar ist..

12. Formschließeinheit nach einem der Ansprüche 1 bis 11, dadurch gekennzeichnet, daß die Klemmeinrichtung (13) dem Abstützelement (21) zugeordnet ist.

13. Formschließeinheit nach einem der Ansprüche 1,2 sowie 4 bis 12, dadurch gekennzeichnet, daß das Führungselement eine Kolbenstange (26) des Antriebs ist, die über einen Abschnitt (26a) mit der Klemmeinrichtung (13) in Wirkverbindung tritt.

14. Formschließeinheit nach Anspruch 1, dadurch gekennzeichnet, daß am stationären Formträger (10) ein Kraftübertragungselement (40) angelenkt ist, an dessen gegenüberliegenden, dem beweglichen Formträger (11) zugeordneten Ende (42) die Klemmeinrichtung (13) angeordnet ist, die mit dem Abschnitt (26a) zusammenwirkt.
